Europäisches Patentamt

**European Patent Office**

**Office européen des brevets**

(11) Publication number: **0 236 106**

**A2**

# (12) EUROPEAN PATENT APPLICATION

(21) Application number: **87301790.9**

(22) Date of filing: **02.03.87**

(51) Int. Cl.⁴: **A 01 D 89/00**

(30) Priority: **03.03.86 AU 4849/86**

(43) Date of publication of application:
**09.09.87 Bulletin 87/37**

(84) Designated Contracting States: **DE FR GB IT NL**

(71) Applicant: **McCarthy, Bernard Justin**
**Brand Highway**
**Gingin Western Australia (AU)**

**McCarthy, Francine Imelda**
**Brand Highway**
**Gingin Western Australia (AU)**

(72) Inventor: **McCarthy, Bernard Justin**
**Brand Highway**
**Gingin Western Australia (AU)**

(74) Representative: **Quest, Barry et al**
**M'CAW & CO. 41-51 Royal Exchange Cross Street**
**Manchester M2 7BD (GB)**

(54) **Grass, cereal crop, forage or hay pick-up machine.**

(57) A pick-up drum for use with a machine for the collection of material from a surface. The pick-up comprises an elongate drum (13) that is rotatably mounted in the respective pick-up machine. A shaft (20) located within the drum is fixedly held by a support frame (10) so that the drum may rotate about it. The shaft (20) is spaced from and parallel to the longitudinal axis of the drum and has a plurality of bearing collars (23) located thereon. Each bearing collar supports a resiliently flexible rod-like finger (25) that extends through apertures (30, 33) in the drum surface. Upon rotation of the drum the eccentric mounting of the shaft (20) will cause the fingers to extend and withdraw in relation to the drum surface, providing maximum extension where the material is being picked up.

FIG 4

**Description**

## GRASS, CEREAL CROP, FORAGE OR HAY PICK-UP MACHINE

This invention relates to an improved apparatus for picking up grass, cereal, forage, hay, potatoes, peas and the like, or any other matter that can be picked up from a surface, such as paper litter or debris, and in particular to an improved apparatus for use on the following:

    (a) pick-up balers,
    (b) combine harvesters,
    (c) forage harvesters, or
    (d) any machine that can use a pick-up.

## BACKGROUND AND SUMMARY OF THE INVENTION

The production of the above-mentioned crops involves pick-up and feeding of crop into the given machine. In order to maximise production and increase output, it is important to have an efficient pick-up system.

Problems that exist with currently available pick-up systems include crop loss due to leaf damage and leaf loss, and in the case of balers and forage harvesters, unacceptable levels of dusting caused through conventional crop collection fingers smashing the plants with their harsh and inefficient action. Also, conventional machines are difficult to maintain as a result of a complicated construction, and such complicated designs increase the cost of manufacture. Problems also occur with the use of metal fingers in that they commonly bend or break, and replacement of such damaged fingers is very difficult and extremely time-consuming.

Therefore, it is the main object of the present invention to provide an apparatus which more efficiently and effectively picks up and collects crops such as grass, cereal, forage, hay, potatoes and peas, and any other material that can be picked up from a surface.

It is a further object of the present invention to provide a pick-up apparatus which is of a simple and economical construction that is easy to maintain, manufacture and assemble.

In its broadest form, the invention provides an apparatus suitable for use with a machine for the collection of material from a surface, comprising a rotating drum, having walls that define an elongate cylinder with a plurality of longitudinally and axially spaced aperatures therein, said drum being provided with bearing means at each end, a support frame for engagement with the bearing means at each end of the drum so as to rotatably support said drum, a drive means adapted to cause rotation of said drum, a shaft located within said drum and fixedly held by said support frame, said shaft being spaced from and parallel to the longitudinal axis of the drum, a plurality of bearing collars rotatably mounted on said shaft, and resiliently flexible fingers coupled to each bearing collar and arranged such that the fingers protrude through the apertures in the drum, wherein during rotation of the drum, said fingers extend and withdraw in relation to the surface of the drum such that the maximum extension of the fingers occurs towards the lowest point of rotation of said drum.

A pick-up in accordance with the above description is found to provide a more efficient and gentle means of lifting crops or material from the ground into various machines. In addition to the fingers carrying the crop or material from the ground to the machine, the surface of the drum is also rotating upwardly thereby further assisting transfer of the crop or material. A major consideration in this invention is the use of flexibly resilient fingers thereby enabling the pick-up machine to be used in all types of field or surface conditions. This is a particularly important consideration since any permanent deformation of fingers would render the machine completely useless.

The closest prior art known to the inventor are Australian Patent 167611 in the name of FAIRWEATHER and BLACK, and Australian Patents 25735/30 and 25734/30 both in the name of INNES MANUFACTURING COMPANY. All three specifications show a rotating drum having retracting fingers, but a careful consideration of the specifications show that the inventions disclosed are not suitable for use with a conventional pick-up. The fingers used in each of the specifications are metal, and in order to prevent the fingers impacting with the ground, means are provided to maintain the height of the drum and fingers well above the ground. As shown in the INNES MANUFACTURE COMPANY's specifications there is provided a shoe that rides along the ground so as to hold the drum in a spaced relationship to the ground so as to prevent the teeth from impacting the soil. However, it has been found necessary that the fingers must pass very close to the ground surface so as to maximise pick-up of the crop. Also, it will be fairly obvious to anyone skilled in the art that due to ground undulations, or rocks or obstacles, and varying ground hardness, the use of metal fingers, even with a guide shoe, make the machines described in the above-mentioned specifications useless. It has been found that even with a slight deformation of the fingers, a drum in which the tynes extend and withdraw will cease to function.

## BRIEF DESCRIPTION OF THE DRAWINGS

In order to more fully explain the Applicant's invention, an embodiment is described hereunder in further detail, but it should be appreciated that the invention is not restricted or confined to any one or combination of these details. This embodiment is illustrated in the accompanying drawings in which:

    FIG. 1 shows a general view of a tractor towing a baling machine where the baler incorporates a pick-up in accordance with this invention,

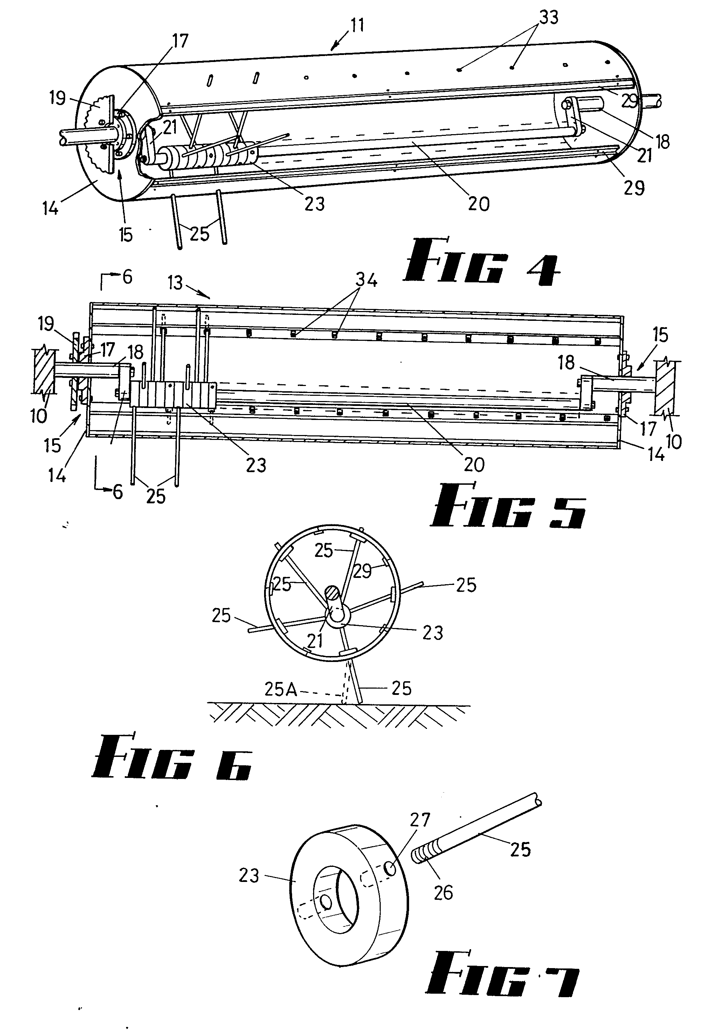

    FIG. 2 shows a front elevation of the pick-up drum,

    FIG. 3 shows a front elevation of the pick-up with an alternative arrangement of finger apertures,

FIG. 4 shows a perspective cut away view of the pick-up drum with a cover plate removed,

FIG. 5 shows a longitudinal cross-sectional view of the pick-up drum,

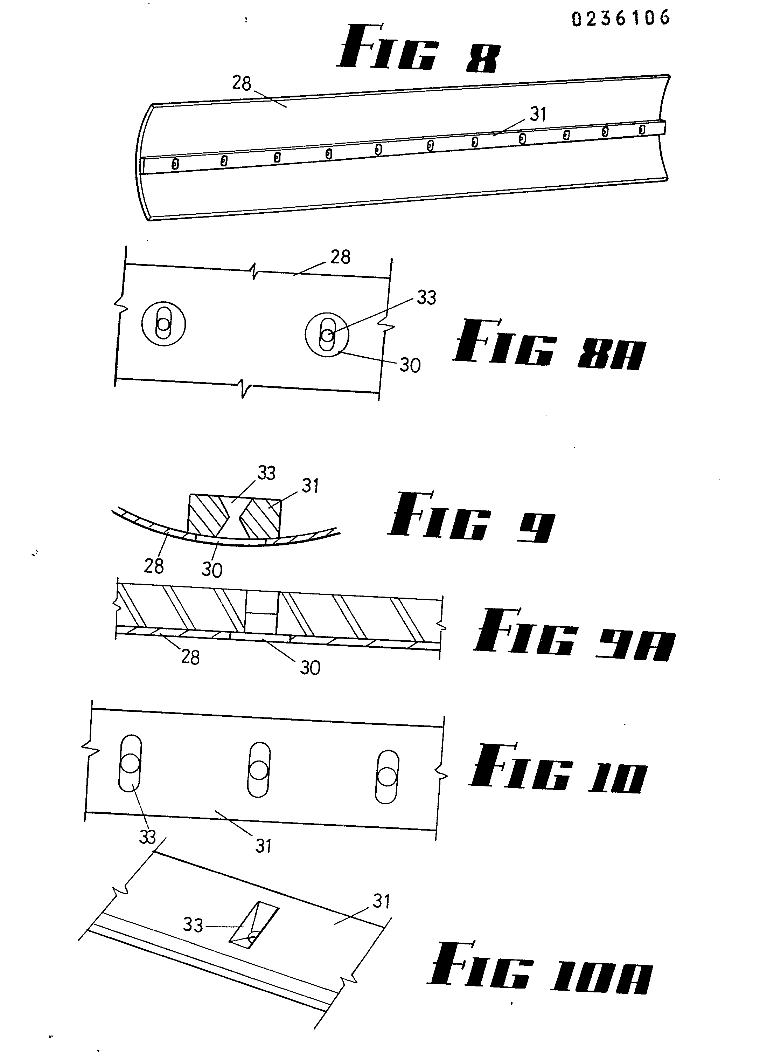

FIG. 6 shows a cross-sectional view of FIG. 5,

FIG. 7 shows a bearing collar and the inner end of a finger,

FIG. 8 shows a perspective view of the inner surface of a cover plate, and wear strip,

FIG. 8A shows a front view of the outer surface of a cover plate,

FIG. 9 shows a transverse cross-section of a wear strip,

FIG. 9A shows a longitudinal cross-section of a wear strip of a second embodiment,

FIG. 10 shows a perspective view of the inner surface of the wear strip,

FIG. 10A shows a perspective view of the inner surface of the wear strip of a second embodiment.

DESCRIPTION OF THE PREFERRED EMBODIMENT

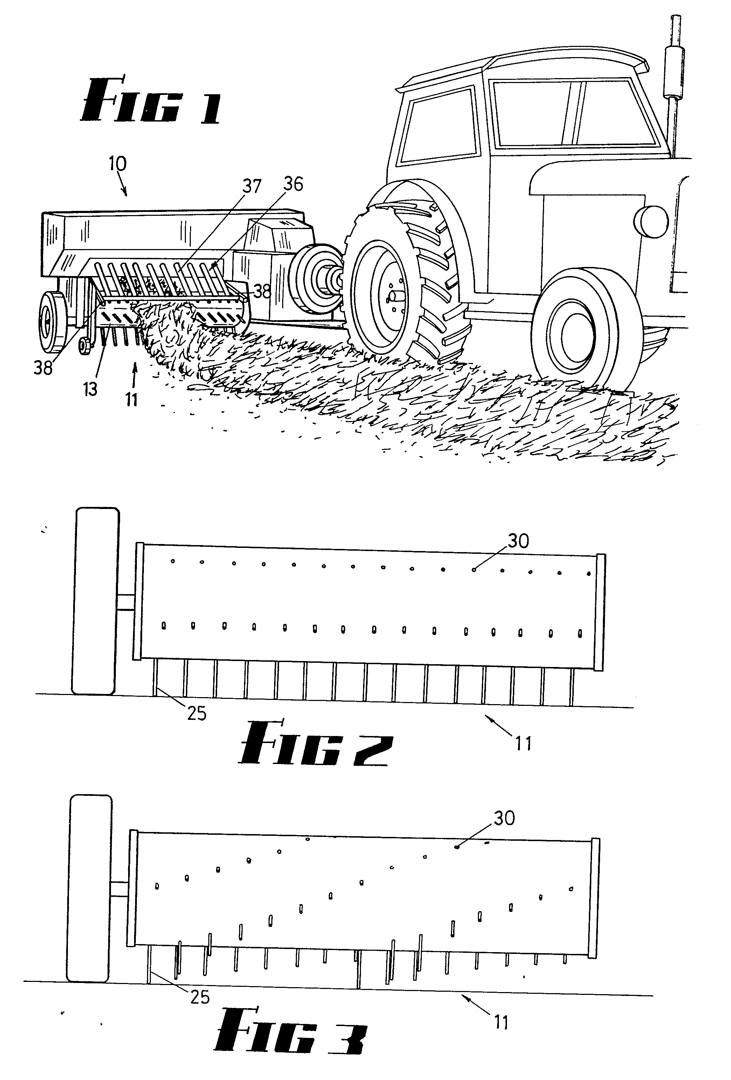

In this embodiment, there is provided a wheeled frame 10 which incorporates a grass, cereal, forage or hay pick-up apparatus 11. FIG. 1 shows the wheeled frame 10 comprising a baling machine drawn by a tractor. The pick-up apparatus 11 comprises a rotating drum 13 that is in the form of an elongate cylinder. Each end of the cylinder is provided with an end plate 14 to which a bearing means 15 is attached. The bearing means comprises a bearing housing with a flange 17 for attachment by threaded fasteners to the end plates 14, and is adapted to hold a bearing therein. The wheeled frame is provided with a stub axle 18 on which the bearing means 15 is journalled.

At one end of the rotating drum 13 there is provided a drive means 19 which comprises a sprocket (or in a further embodiment, a V-belt means), that is fixed to an end plate 14 of the rotating drum 13, and is connected to a power take-off from the baler.

A shaft 20 is is located within the rotating drum 13, and has support arms 21 located at each end of the shaft 20. The support arms 21 are attached at one end to the stub axle 18 by a threaded fastener, and the shaft 20 is attached to the other end of the support arms 21 by a threaded fastener. The support arms 21 rigidly support the shaft 20 such that the shaft's longitudinal axis is parallel but not coincident with the longitudinal axis of the rotating drum 13. In this embodiment, the shaft 20 is supported forwardly, in relation to the wheeled frame 10, and in a plane lower than the longitudinal axis of the rotating drum 13. In another embodiment the support arms 21 may be welded to both the shaft 20 and stub axles 18, and the stub axles 18 are attached to the wheeled frame 10 by threaded fasteners.

The means of attaching the support arms 21 to the shaft 20 and stub axle 18 in both examples allows for the position of the shaft 20 to be adjusted.

The shaft 20 is provided with a plurality of bearing collars 23 each of which is formed from a wear-resistant material. In this embodiment, the bearing collars 23 are formed from a ring of graphite-impregnated nylon. The bearing sleeves 23 have sufficient clearance on the shaft to provide a running fit both in relation to the shaft 20, and the adjacent bearing collars.

The bearing collars 23 are adapted to carry, in this embodiment, one finger 25 each. The fingers comprise an elongate rod of resiliently flexible material, wherein the material is selected to have a modulus of elasticity of between 1 to 5 GPa. Such material can either be homogeneous, or comprise a composite formed from two or more materials. In this embodiment, the fingers 25 comprise a nylon material, but in other embodiments, it is proposed to use a finger 25 comprising glass fibre reinforced rod coated with nylon, rods of various types of plastics, or any other rod having the required modulus of elasticity. The use of fingers 25 that have a suitable modulus of elasticity provides sufficient rigidity while at the same time allowing for sufficient flexing of the finger both transversely (25A) or longitudinally so as to prevent breakage due to impacting with the ground, a rock or similar obstruction.

The fingers 25 have threaded inner ends 26, and the bearing collars 23 are provided with two or more additional threaded holes 27. In this embodiment each bearing sleeve 23 holds only one finger 25. The additional threaded holes 27 are to allow for replacement of a worn or broken fingers 25 without having to remove the bearing collars 23.

The rotating drum 13 comprises a series of cover plates 28 which are supported on bars 29 that are attached to the periphery of the end plates 14. The cover plates 28 are positioned between the bars 29, and in this embodiment, the cover plates 28 are attached to the bars 29 by way of rivets.

Each cover plate 28 is provided with a wear strip 31 which is located centrally on the inner surface of the cover plate 28. The wear strip 31 is manufactured from material that is a suitable compliment to the material used for the fingers 25 in relation to the co-efficient of friction between the two materials, so as to extend the operating life of the fingers 25.

In this embodiment, the wear strip 31 comprises a polythene material. Apertures 33 and 30 are provided in both the wear strip 31 and cover plate 28 for location of the fingers 25. The aperture 33 as shown in FIG. 10 or 10A are provided with sufficient clearance under normal operating conditions for the finger 25.

In FIG. 10 the wear strip is provided with slot-like apertures on both the inner and outer surface of the wear strip 31. The slot-like apertures taper to a smaller aperture within the wear strip. The smaller aperture is sized so as to provide a clearance fit with the fingers 25. The arrangement of the slot-like apertures allows the back and forth movement, more correctly described as transverse rotation, of the fingers 25 in relation to the wear strip 31. As shown in FIG. 10A, a second embodiment, only one elongated slot is provided, on the inner surface of the wear strip 31, which tapers to a smaller aperture that is located on the outer surface of the wear strip.

Since the shaft 20 is eccentrically located with respect to the central axis of the rotating drum 13, rotation of the rotating drum 13 will cause the fingers to move in and out in relation to the surface of the rotating drum 13. The position of the shaft 20 is adjustable, and in this embodiment, the fingers 25 are arranged to have a maximum extension towards the lowermost point of the rotating drum 13, and are adjustable such that the maximum extension can occur at approximately 45° either side of the lowest point of the rotating drum 13. Positioning of the maximum extension within this region provides the greatest efficiency of the pick-up apparatus. The extension of the fingers 25 will continue to reduce to a minimum extension in relation to the surface of the rotating drum 13 at an upper and rear portion of the rotating drum 13.

In this embodiment, a series of five cover plates 28 each having a wear strip 31 is used. This provides a radial spacing of 72° between adjacent fingers 25. The fingers 25 are arranged such that the second finger is at an angle of 72° with respect to the first, and the third finger is at an angle of 72° to the second, and so on. In this embodiment the fingers 25 are spaced by approximately 18 mm.

The wheeled frame 10 is preferably provided with a baffle 36 which extends across the upper surface of the rotating drum 13. The baffle 36 is positioned so as to provide sufficient clearance for the fingers 25 as they rotate. The baffle flat sheet 36 is designed to keep the hay or crop from becoming dislodged from the pick-up tynes. In this embodiment, the baffle 36 comprises a plurality of comb fingers 37, and the baffle 36 is attached to the wheeled frame by hinge supports 38. The hinge supports 38 are provided with a means of adjusting the height of the baffle 36. In other embodiments the baffle 36 may comprise a flat sheet that extends across the upper surface of the rotating drum 13.

As shown in FIG. 3 the arrangements of the apertures 30 in the rotating drum 13 can be varied to provide a staggered progression of the tynes 25, which may be of assistance when used in lighter crops. Also, in this embodiment there are five rows of fingers 25 but this number can be varied, and the fingers 25 may be arranged inconfigurations other than the straight or spiral configurations illustrated in this embodiment.

In this embodiment, the fingers 25 are provided with a generally circular cross-section. However it is anticipated that fingers having alternative cross-sections such as eliptical, triangular, blade-shaped, or rectangular may also be useful.

Experiments with this pick-up apparatus show that it requires much less horsepower to drive than a conventional pick-up. In addition, it has also been found that this pick-up apparatus provides a more gentle action whereby the hay or crop is lifted into the baling machine, rather than being swept or pushed into the baler. It has also been found that this pick-up apparatus works well on swath cut crop which is lying parallel to the direction of pick-up, and swath cut crops that have been damaged by adverse weather such as snow or heavy rain.

## Claims

1. A pick-up apparatus suitable for use with a machine for the collection of material from a surface comprising:
a rotating drum, having walls that define an elongate cylinder with a plurality of longitudinally and axially spaced apertures therein, said drum being provided with bearing means at each end
a support frame for engagement with the bearing means at each end of said drum so as to rotatably support said drum,
a drive means adapted to cause rotation of said drum,
a shaft located within said drum and fixedly held by said support frame, said shaft being spaced from and parallel to the longitudinal axis of said drum,
a plurality of bearing collars rotatably mounted on said shaft, and
resiliently flexible fingers coupled to each bearing collar and arranged such that the fingers protrude through the apertures in said drum, whereby during rotation of said drum, said fingers extend and withdraw in relation to the surface of said drum such that the maximum extension of the fingers occurs towards the lowest point of rotation of said drum.

2. A pick-up apparatus according to claim 1 wherein the resiliently flexible fingers are formed from a material having an elastic modulus in the range of 1 to 5 GPa.

3. A pick-up apparatus according to claim 1 wherein the resiliently flexible fingers are formed from nylon.

4. A pick-up apparatus according to claim 1 wherein the resiliently flexible fingers are formed from nylon with a fibre reinforced plastic core.

5. A pick-up apparatus according to any of the preceding claims wherein the resiliently flexible fingers comprise an elongate rod-like member having a substantially constant cross-section along its length.

6. A pick-up apparatus according to any of the preceding claims wherein the inner end of the said fingers is provided with a threaded portion, and the said bearing collars are provided with a threaded hole for location of the finger therein.

7. A pick-up apparatus according to claim 6 wherein the bearing collars are provided with a plurality of threaded holes.

8. A pick-up apparatus according to any of the preceding claims wherein the rotating drum further comprises a pair of end plates, a plurality of bars extending between, and attached to the periphery of said end plates, and a plurality of cover plates adapted for fitment between adjacent said bars so as to form an elongate cylinder, said cover plates being provided with walls defining apertures therein.

9. A pick-up apparatus according to claim 8 wherein said bearing means comprises a bearing housing secured to each of said end plates, and said support frame being provided with a pair of stub axles for engagement with said bearing means so as to rotatably support said drum.

10. A pick-up apparatus according to any of the preceding claims wherein a plurality of wear strips are attached to the internal surface of said drum, said wear strips being provided with apertures therein that align with said apertures in said drum, said apertures being provided with sufficient clearance to allow movement of the fingers therein.

11. A pick-up apparatus according to claim 10 wherein the apertures in the wear strip further comprise a slot-like aperture on both the inner and outer surface of the wear strip that tapers to a smaller aperture within the wear strip, said slot-like apertures being arranged to allow transverse rotation of the figures in relation to the wear strip.

12. A pick-up apparatus according to claim 10, wherein the internal surface of the wear strip is provided with a slot-like aperture that tapers to a smaller aperture on the outer surface of the wear strip, said slot-like aperture being arranged to allow transverse rotation of the fingers in relation to the wear strip.

13. A pick-up apparatus according to claim 9 wherein a pair of support arms are provided that releasably support said shaft at one end of each of said support arms, the other end of each said support arm being releasably secured to the said stub axles, such that the said shaft is spaced from and parallel to the longitudinal axis of said drum.

14. A pick-up apparatus according to any of the preceding claims wherein a baffle is positioned above and forwardly of said rotating drum, said baffle being pivotally held at each end such that in operation the crop is urged towards the rotating drum.

0236106

**FIG 1**

**FIG 2**

**FIG 3**

0236106

**FIG 4**

**FIG 5**

**FIG 6**

**FIG 7**

0236106

**FIG 8**

**FIG 8A**

**FIG 9**

**FIG 9A**

**FIG 10**

**FIG 10A**